# EUROPÄISCHE PATENTANMELDUNG

(11) **EP 1 445 425 A2**
(43) Veröffentlichungstag der Anmeldung: **11.08.2004**
(21) Anmeldenummer: 04011322.7
(22) Anmeldetag: 28.03.2002
(51) Int. Cl.: F01D 5/28

(54) **Gasturbinenschaufel mit einer keramischen Wärmedämmschicht**

(30) Priorität: 03.04.2001 EP 01108371
(62) Teilanmeldung aus: 02727505.6
(71) Anmelder: SIEMENS AKTIENGESELLSCHAFT, 80333 München (DE)
(72) Erfinder: Fleck, Robert, 91325 Adelsdorf (DE); Jansing, Thomas, 91056 Erlangen (DE); Schumann, Eckart Dr., 45481 Muelheim a.d.Ruhr (DE)

(57) **Zusammenfassung**

Es wird eine Gasturbinenschaufel (1) mit einer keramischen Wärmedämmschicht (17) vorgestellt, wobei die keramische Wärmedämmschicht (17) aus 10 bis 95 Gew.-% Magnesiumaluminat, 5 bis 90 Gew.-% Magnesiumoxid und 0 bis 20 Gew.-% Aluminiumoxid besteht, wobei Körner aus Magnesiumoxid in eine Matrix aus spinellförmigem Magnesiumaluminat eingebettet sind, wodurch eine besonders gute Anpassung des Wärmeausdehnungskoeffizienten der keramischen Wärmedämmschicht (17) an einen metallischen Grundkörper (15) der Gasturbinenschaufel (1) erreicht wird. Gleichzeitig weist die keramische Wärmedämmschicht (17) eine Porosität größer als 3 Vol.-% auf. Hierdurch wird eine ausreichend niedrige Wärmeleitfähigkeit sichergestellt.

## Beschreibung

Die Erfindung betrifft eine Gasturbinenschaufel mit einer keramischen Wärmedämmschicht.

Die WO 01/00539 A2 offenbart einen keramischen Wärmedämmstoff für Hochtemperaturanwendungen. Der Werkstoff ist so ausgestaltet, dass ein thermischer Ausdehnungskoeffizient an den eines Metalls angepasst ist, so dass beim Aufbringen des keramischen Werkstoffs in Form einer Beschichtung auf einen metallischen Grundkörper es nur zu geringen thermischen Spannungen aufgrund unterschiedlicher thermischer Ausdehnung kommt. Hierzu weist der keramische Werkstoff zwischen 10 und 95 Gew.-% Magnesiumaluminat (MgAl₂O₄) MgAl-Spinell, zwischen 5 und 90 Gew.-% Magnesiumoxid (MgO) und bis zu 20 Gew.-% Aluminiumoxid (Al₂O₃) auf. Weiterhin sind Körner aus Magnesiumoxid in einer Magnesiumaluminat-Matrix eingebettet. Es wird ausgeführt, dass das Magnesiumaluminat als homogene Matrix vorliegen muss, die nicht aus zusammengesinterten Magnesiumaluminat-Körnern mit dazwischenliegenden Freiräumen besteht, sondern aus homogenem porenfreiem Magnesiumaluminat. In dieser Struktur ist das Magnesiumaluminat ausreichend thermisch stabil, um eine das Magnesiumoxid umschließende Hülle auch während des Vorgangs des thermischen Spritzens zu bewahren. Auf diese Weise bleibt der Bereich des Magnesiumoxids während des thermischen Spritzens umschlossen und das Magnesiumoxid kann nicht sublimieren oder verdampfen. Die Anwendung des keramischen Bauteils ist vorgesehen in einer Hochtemperatur-Brennstoffzelle, wo eine besonders dichte, nicht poröse keramische Schicht zur Vermeidung von Gasverlusten zum Einsatz kommen muss.

Die WO 98/26110 offenbart eine Wärmedämmschicht für Hochtemperaturanwendungen insbesondere bei Gasturbinenschaufeln. Solche Gasturbinenschaufeln sind besonders hohen Temperaturen ausgesetzt und dabei gleichzeitig hohen thermischen Belastungen unterworfen. Daher werden diese Gasturbinenschaufeln häufig aus einer Nickel-, Kobalt- oder Eisenbasis-Superlegierung gefertigt, die besondere Hochtemperaturfestigkeiten aufweist. Weiterhin werden die Gasturbinenschaufeln über ein inneres Kühlsystem mittels Kühlluft gekühlt. Zudem werden die Gasturbinenschaufeln über ein Schutzschichtsystem geschützt, das aus einer metallischen Korrosionsschutzschicht besteht, auf die eine keramische Wärmedämmschicht aufgebracht ist. Eine typische metallische Korrosionsschutzschicht ist beispielsweise eine Schicht aus der Basis-Legierung MCrAlY, die nicht nur korrosive Angriffe auf den Grundkörper abwehrt, sondern auch eine Haftvermittlung für die keramische Wärmedämmschicht bewirkt. Ein spezielles Problem stellt eine thermische Wechselbelastung dar, da die keramische Wärmedämmschicht einen gegenüber dem metallischen Grundkörper oder der metallischen Korrosionsschutzschicht unterschiedlichen Wärmeausdehnungskoeffizienten aufweist, was zu thermischen Spannungen führt. Dies wiederum hat eine signifikante Lebensdauerbegrenzung zur Folge, da das Versagen der keramischen Wärmedämmschicht aufgrund eines Abplatzens die Lebensdauer der Gasturbinenschaufel bestimmt. Übliche Wärmedämmschichten auf Zirkondioxid-Basis, die in der Regel mit Yttriumoxid phasenstabilisiert werden, können unter Umständen durch neuartige Keramiken ersetzt werden, die ternäre Oxide sind und eine Pyrochlor- oder Perowskitstruktur aufweisen. Typischerweise werden keramische Wärmedämmschichten durch ein atmosphärisches Plasmaspritzen oder eine Elektronenstrahlverdampfung aufgebracht.

Die US-PS 5,388,577 zeigt eine keramische Wärmedämmschicht, die zweischichtig ausgebildet ist, wobei die äußere Schicht aus Aluminiumoxid gebildet ist. Die Aluminiumoxidschicht wird bewusst über die innere Zirkonoxidschicht gelegt, weil Aluminiumoxid den höheren Abrassivwiderstand aufweist.

Der Erfindung liegt die Aufgabe zugrunde, eine Gasturbinenschaufel mit einer keramischen Wärmedämmschicht anzugeben, die eine besonders hohe Lebensdauer aufweist.

Erfindungsgemäß wird diese Aufgabe gelöst durch eine Gasturbinenschaufel gemäß Anspruch 1.

Die Gasturbinenschaufel kann sowohl als Laufschaufel als auch als Leitschaufel ausgeführt sein.

Eine Porosität größer als 3 Vol.-% bedeutet, dass Hohlräume in der keramischen Wärmedämmschicht mit einem Volumenanteil von größer als 3% vorhanden sind. Eine solche Porosität ist für eine keramische Wärmedämmschicht einer Gasturbinenschaufel praktisch unerlässlich, da nur so die niedrigen Wärmeleitfähigkeiten erreicht werden, die dem Schutz des gekühlten Grundkörpers der Gasturbinenschaufel dienen. Vorzugsweise ist der Volumenanteil der Hohlräume nicht größer als 40%. Wie oben beschrieben ist der genannte Werkstoff der keramischen Wärmedämmschicht, also die Magnesiumoxid (MgO)-Körner in einer Magnesiumaluminat (MgAl₂O₄)-Matrix, besonders gut geeignet, an metallische Wärmeausdehnungskoeffizienten angepasst zu werden. Der Vergrößerung des thermischen Ausdehnungskoeffizienten dienen die Körner aus Magnesiumoxid (MgO). Bisher ging man davon aus, dass Magnesiumoxid unter hohen Temperaturen beim thermischen Spritzen ungeeignet für eine keramische Wärmedämmschicht ist. Selbst bei der Matrix aus Magnesiumaluminat (MgAl₂O₄) mit Spinellstruktur wurde davon ausgegangen, dass eine Stabilität des Magnesiumoxids nur durch eine dichte, keine Hohlräume aufweisende Matrix aus Magnesiumaluminat (MgAl₂O₄) erreichbar ist. Da solche dichten, unporösen Strukturen aber, wie erwähnt, nicht für den Einsatz bei einer Gasturbinenschaufel geeignet sind, wurde dieser Werkstoff nicht als keramische Wärmedämmschicht auf einer Gasturbinenschaufel in Erwägung gezogen. Nach Erkenntnis der Erfindung ist es aber jetzt doch möglich, in einem konventionellen Prozess des thermischen Spritzens eine poröse keramische Wärmedämmschicht der genannten Art herzustellen. Damit läßt sich nun insbesondere die besonders gute Anpassung des thermischen Längenausdehnungskoeffizienten der keramischen Wärmedämmschicht an den metallischen Grundkörper für die Gasturbinenschaufel nutzbar machen.
A) Vorzugsweise weisen die MgO-Körner einen mittleren Durchmesser von 0,1 µm bis 2 µm auf. Diese Korngröße wirkt sich besonders vorteilhaft auf die Spritzfähigkeit des keramischen Werkstoffs aus.
B) Bevorzugt enthält das Material der Wärmedämmschicht 55 bis 80 Gew.-% Magnesiumoxid. Ein solcher Werkstoff weist je nach Menge an Magnesiumoxid einen thermischen Ausdehnungskoeffizienten auf, der bei 1000 °C zwischen 11 und 12 x 10⁻⁶ K⁻¹ liegt. In diesem Bereich ist der Werkstoff besonders gut an den thermischen Ausdehnungskoeffizienten des metallischen Grundkörpers angepasst.
C) Die Wärmedämmschicht enthält zusätzlich mindestens ein Oxid aus der Gruppe Calciumoxid, Siliciumoxid, Zirkonoxid und Eisenoxid. Diese Materialien wirken sich als Zusatzstoffe günstig auf die Materialeigenschaften des Werkstoffs aus.
D) Bevorzugt weist die Gasturbinenschaufel einen Grundkörper aus einer Nickel- oder Kobaltbasis-Superlegierung auf, wobei auf den Grundkörper die keramische Wärmedämmschicht aufgebracht ist und wobei ein an den Grundkörper angrenzender erster Schichtbereich aufgebracht ist, auf den ein vom ersten Schichtbereich verschiedener zweiter Schichtbereich aufgebracht ist.
E) Weiter bevorzugt umfasst der Grundkörper eine auf die Superlegierung aufgebrachte metallische Korrosionsschutzschicht.
F) Vorzugsweise besteht der genannte erste Schichtbereich aus 10 bis 95 Gew.-% Magnesiumaluminat (MgAl₂O₄) und 5 bis 90 Gew.-% Magnesiumoxid (MgO) sowie 0 bis 20 Gew.-% Aluminiumoxid (Al₂O₃), während der zweite Schichtbereich aus Yttriumoxid-stabilisiertem Zirkondioxid besteht. Es ist auch denkbar, dass diese Zusammensetzung des ersten und des zweiten Schichtbereichs umgekehrt sind, d.h. dass der erste Schichtbereich aus Yttriumoxid-stabilisiertem Zirkondioxid besteht, während der zweite Schichtbereich aus 10 bis 95 Gew.-% Magnesiumaluminat (MgAl₂O₄) und 5 bis 90 Gew.-% Magnesiumoxid (MgO) sowie 0 bis 20 Gew.-% Aluminiumoxid (Al₂O₃) besteht. In einem solchen Schichtsystem lassen sich die erprobten Eigenschaften des konventionellen Zirkondioxid mit den besonders günstigen Eigenschaften hinsichtlich der thermischen Ausdehnungsfähigkeit des neuen keramischen Werkstoffs aus Magnesiumaluminat (MgAl₂O₄) und Magnesiumoxid (MgO) kombinieren.
G) Bevorzugt bestehen der erste und der zweite Schichtbereich aus 10 bis 95 Gew.-% Magnesiumaluminat (MgAl₂O₄) und 5 bis 90 Gew.-% Magnesiumoxid (MgO) sowie 0 bis 20 Gew.-% Aluminiumoxid (Al₂O₃), wobei aber der erste Schichtbereich eine kleinere Porosität aufweist als der zweite Schichtbereich. Die notwendige Porosität wird somit insbesondere durch den außen liegenden zweiten Schichtbereich erreicht, während im ersten Schichtbereich eine dichtere Struktur vorliegt, die das Heißgas in Bezug auf korrosive Angriffe besser gegen den darunter liegenden metallischen Grundkörper abschirmt.
H) Vorzugsweise ist die keramische Wärmedämmschicht auf eine keramische Grundschicht aufgebracht, die eine Porosität kleiner als 2 Vol.-% aufweist. Die keramische Grundschicht kann die gleiche chemische Zusammensetzung wie die keramische Wärmedämmschicht haben, aber unter Umständen auch praktisch völlig dicht auf den metallischen Grundkörper aufgebracht sein. Die genannte Porosität der keramischen Wärmedämmschicht bezieht sich somit nicht auf diese keramische Grundschicht. Dies führt wiederum zu einer besonders günstigen Kombination von guten Wärmedämmeigenschaften einerseits und Abschirmung gegenüber korrosiven Angriffen andererseits.
I) Vorzugsweise nimmt die Porosität in der keramischen Wärmedämmschicht nach außen hin gradiert zu. Während also bisher definierte Schichtsysteme für die Kombination niedriger und hoher Porosität genannt wurden, ist nunmehr ein gradueller Übergang dichter Struktur zu Struktur mit hoher Porosität vorgeschlagen.

Die Ausführungen gemäß den Absätzen A) bis I) lassen sich auch untereinander kombinieren.

Die Erfindung wird anhand der Zeichnung beispielhaft näher erläutert. Es zeigen teilweise schematisch und nicht maßstäblich:
- FIG 1: eine Gasturbinenschaufel,
- FIG 2: eine keramische Wärmedämmschicht,
- FIG 3 - 5: in einem Längsschnitt verschiedene Konfigurationen einer keramischen Wärmedämmschicht auf einem Grundkörper einer Gasturbinenschaufel.

Gleiche Bezugszeichen haben in den verschiedenen Figuren die gleiche Bedeutung.

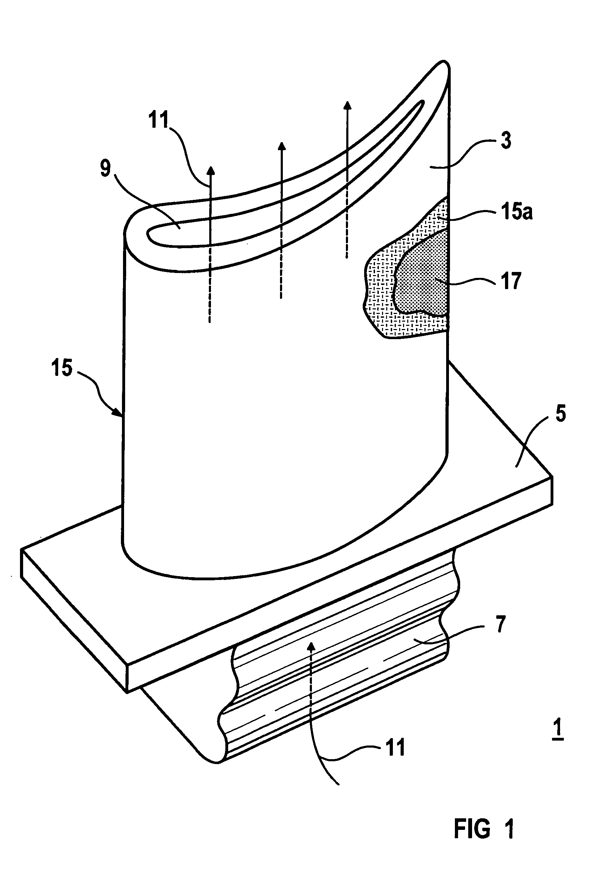

Figur 1 zeigt eine Gasturbinenschaufel 1. Die Gasturbinenschaufel 1 weist ein Schaufelblatt 3, eine Plattform 5 und einen Schaufelfuß 7 auf. Die Gasturbinenschaufel 1 weist weiter einen inneren Hohlraum 9 auf, durch den zur Kühlung Kühlluft 11 geleitet wird. Die Gasturbinenschaufel 1 ist aus einem Grundkörper 15 gebildet, der aus einer Nickel- oder Kobaltbasis-Superlegierung besteht. Der Grundkörper 15 umfasst auch eine äußere metallische Korrosionsschutzschicht 15A, die sowohl dem Schutz vor Korrosion als auch der Anbindung für eine keramische Wärmedämmschicht dient. Eine solche keramische Wärmedämmschicht 17 ist auf die Korrosionsschutzschicht 15A aufgebracht.

Beim Einsatz der Gasturbinenschaufel 1 wird das Schaufelblatt 3 von einem sehr heißen Gas umströmt.Es ist technisch nötig, die Gasturbinenschaufel 1 intensiv mittels der Kühlluft 11 zu kühlen. Weiterhin muss durch die keramische Wärmedämmschicht 17 die Gasturbinenschaufel 1 gegenüber dem heißen Gas thermisch abgeschirmt werden. Die Plattform 5 dient zur Abschirmung des heißen Gases von einer nicht näher dargestellten Rotorscheibe. In eine solche Rotorscheibe greift auch der Schaufelfuß 7 ein, mit der die Gasturbinenschaufel 1 an einem Gasturbinen-Rotor befestigt ist.

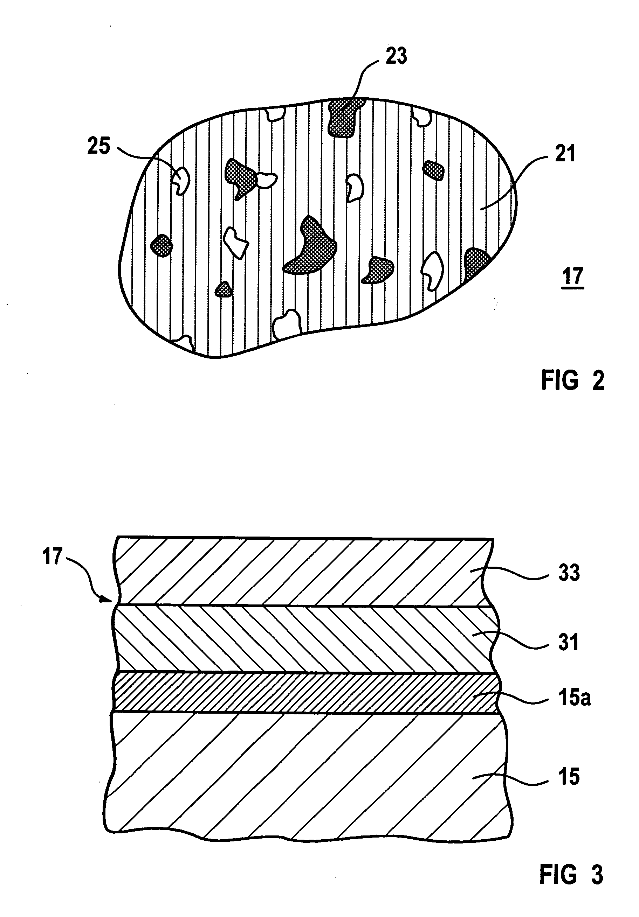

In Figur 2 ist schematisch die keramische Wärmedämmschicht 17 dargestellt. In eine Matrix 21 aus spinellförmigem Magnesiumaluminat sind Körner 23 aus Magnesiumoxid eingebettet. Diese Zusammensetzung führt insbesondere zu einem gegenüber einer konventionellen keramischen Wärmedämmschicht erhöhten Wärmeausdehnungskoeffizienten, so dass der thermische Wärmeausdehnungskoeffizient der Wärmedämmschicht 17 dem thermischen Wärmeausdehnungskoeffizienten des Grundkörpers 15 besser angepasst ist. Dies führt zu geringeren thermischen Spannungen, was insbesondere bei einer thermischen Wechselbelastung eine erheblich erhöhte Lebensdauer für die keramische Wärmedämmschicht 17 und damit auch der Gasturbinenschaufel 1 zur Folge hat. Überraschenderweise läßt sich die keramische Wärmedämmschicht 17 mit einer erheblichen Porosität herstellen. Diese Porosität bedeutet, dass Hohlräume 25 in der keramischen Wärmedämmschicht 17 eingeschlossen sind. Die Porosität ist größer als 3 Vol.-%, vorzugsweise größer als 5 Vol.-%. Erst durch diese Porosität wird eine genügend niedrige Wärmeleitfähigkeit für die keramische Wärmedämmschicht 17 erreicht.

Figur 3 zeigt in einem Längsschnitt eine keramische Wärmedämmschicht 17, die auf einem Grundkörper 15 einer Gasturbinenschaufel 1 aufgebracht ist.

Die keramische Wärmedämmschicht 17 ist erfindungsgemäß aus zwei Schichtbereichen aufgebaut: ein erster Schichtbereich 31, der an den Grundkörper 15, d.h. an die Korrosionsschutzschicht 15A angrenzt und einen auf den ersten Schichtbereich 31 aufgebrachten zweiten Schichtbereich 33. Die Schichtbereiche 31 und 33 sind sowohl chemisch als auch strukturell voneinander verschieden. Der zweite Schichtbereich 33 besteht aus der genannten Magnesiumaluminat-/Magnesiumoxid-Mischung bestehen, während der erste Schichtbereich 31 aus einer konventionellen Yttrium-stabilisierten Zirkondioxid-Keramik besteht.

Weiterhin kann der erste Schichtbereich 31 mit einer niedrigen oder sogar verschwindenden Porosität aufgebracht sein, während der zweite Schichtbereich 33 eine hohe Porosität aufweist. Hierdurch werden niedrige Wärmeleitfähigkeit mit hoher Abschirmung gegenüber korrosiven Gasen kombiniert.

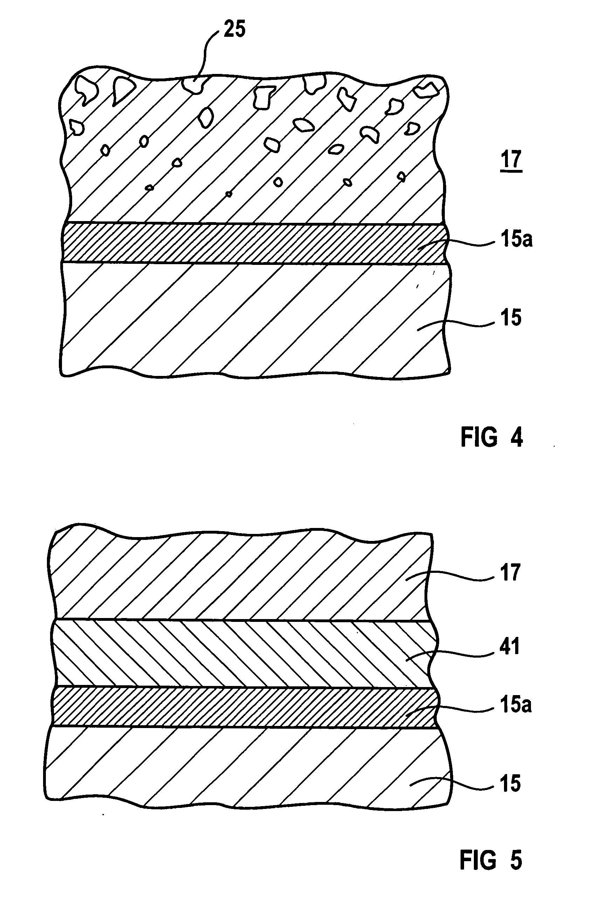

Figur 4 zeigt eine weitere Ausgestaltung einer auf einem Grundkörper 15 einer Gasturbinenschaufel 1 angeordneten keramischen Wärmedämmschicht 17. Die Hohlräume 25 vergrößern sich hier in ihrem mittleren Durchmesser in einer Richtung vom Grundkörper 15 weg nach außen. Durch diese graduelle oder gradierte Struktur werden wiederum die günstigen Eigenschaften hinsichtlich der Wärmeleitfähigkeit einerseits und der Abschirmwirkung gegenüber dem korrosiven Gas andererseits kombiniert.

In Figur 5 ist die keramische Wärmedämmschicht 17 auf eine keramische Grundschicht 41 aufgebracht. Die keramische Grundschicht 41 kann sich sowohl chemisch als auch strukturell von der keramischen Wärmedämmschicht 17 unterscheiden.

## Patentansprüche

1. Gasturbinenschaufel (1),
die einen Grundkörper (15) aus einer Nickel- oder Kobaltbasis-Superlegierung aufweist,
wobei auf den Grundkörper (15) eine keramische Wärmedämmschicht (31, 33) aufgebracht ist,
und wobei ein an den Grundkörper (15) angrenzender erster Schichtbereich (31) aufgebracht ist,
auf den ein vom ersten Schichtbereich (31) verschiedener zweiter Schichtbereich (33) aufgebracht ist,
wobei der zweite Schichtbereich (33)
10 bis 95 Gew.-% Magnesiumaluminat (MgAl₂O₄),
5 bis 90 Gew.-% Magnesiumoxid (MgO),
0 bis 20 Gew.-% Aluminiumoxid (Al₂O₃),
sowie einen Rest an üblichen Verunreinigungen umfasst und in dem Körner (23) aus Magnesiumoxid (MgO) mit einem mittleren Durchmesser von 0,1 µm bis 10 µm in eine Matrix aus spinellförmigem Magnesiumaluminat (MgAl₂O₄) eingebettet sind,
wobei der erste Schichtbereich (31) aus Yttriumoxid (Y₂O₃)-stabilisiertem Zirkondioxid (ZrO₂) besteht,
wobei die Schichtbereiche (31, 33) eine Porosität größer als 3 Vol-% aufweisen.

2. Gasturbinenschaufel (1) nach Anspruch 1,
bei der die Körner (23) einen mittleren Durchmesser von 0,1 µm bis 2 µm aufweisen.

3. Gasturbinenschaufel (1) nach Anspruch 1,
bei der die Wärmedämmschicht (17) 55 bis 80 Gew.-% Magnesiumoxid (MgO) enthält.

4. Gasturbinenschaufel (1) nach Anspruch 1,
bei der die Wärmedämmschicht (17) zusätzlich mindestens ein Oxid aus der Gruppe umfasst, welche CaO, SiO₂, ZrO₂ und Fe₂O₃ enthält.

5. Gasturbinenschaufel (1) nach Anspruch 1,
die einen Grundkörper (15) aus einer Nickel- oder Kobaltbasis Superlegierung aufweist, wobei auf den Grundkörper (15) die keramische Wärmedämmschicht (17) aufgebracht ist und wobei ein an den Grundkörper (15) angrenzender erster Schichtbereich (31) aufgebracht ist, auf den ein vom ersten Schichtbereich (31) verschiedener zweiter Schichtbereich (33) aufgebracht ist.

6. Gasturbinenschaufel (1) nach Anspruch 5,
bei der der Grundkörper (15) eine auf die Superlegierung aufgebrachte metallische Korrosionsschutzschicht (15A) umfasst.

7. Gasturbinenschaufel (1) nach Anspruch 5,
bei der der erste Schichtbereich (31) aus 10 bis 95 Gew.-% Magnesiumaluminat (Mg Al₂O₄), 5 bis 90 Gew.-% Magnesiumoxid (MgO), 0 bis 20 Gew.-% Aluminiumoxid (Al₂O₃) und der zweite Schichtbereich (33) aus Yttriumoxid (Y₂O₃)-stabilisiertem Zirkondioxid (ZrO₂) besteht.

8. Gasturbinenschaufel (1) nach Anspruch 5,
bei der erste Schichtbereich (31) aus Yttriumoxid (Y₂O₃)-stabilisiertem Zirkondioxid (ZrO₂) und der zweite Schichtbereich (33) aus 10 bis 95 Gew.-% Magnesiumaluminat (Mg Al₂O₄), 5 bis 90 Gew.-% Magnesiumoxid (MgO) und 0 bis 20 Gew.-% Aluminiumoxid (Al₂O₃) besteht.

9. Gasturbinenschaufel (1) nach Anspruch 5,
bei der der erste Schichtbereich (31) und der zweite Schichtbereich (33) aus 10 bis 95 Gew.-% Magnesiumaluminat (Mg Al₂O₄), 5 bis 90 Gew.-% Magnesiumoxid (MgO) und 0 bis 20 Gew.-% Aluminiumoxid (Al₂O₃) bestehen, wobei der erste Schichtbereich (31) eine kleinere Porosität aufweist, als der zweite Schichtbereich (33).

10. Gasturbinenschaufel (1) nach Anspruch 1,
bei der die keramische Wärmedämmschicht (17) auf eine keramische Grundschicht (41) aufgebracht ist, die eine Porosität kleiner als 2 Vol-% aufweist.

11. Gasturbinenschaufel (1) nach Anspruch 1,
bei der die Porosität in der keramischen Wärmedämmschicht (17) nach außen hin gradiert zunimmt.
